# EUROPÄISCHE PATENTSCHRIFT

(11) **EP 0 509 425 B1**
(45) Veröffentlichungstag und Bekanntmachung des Hinweises auf die Patenterteilung: **19.10.1994**
(21) Anmeldenummer: 92106327.7
(22) Anmeldetag: 13.04.1992
(51) Int. Cl.: A01F 15/07

(54) **Zugmittelförderer**
Conveyor belt
Bande transporteuse

(30) Priorität: 19.04.1991 DE 4112774
(43) Veröffentlichungstag der Anmeldung: 21.10.1992
(73) Patentinhaber: DEERE & COMPANY, Moline, Illinois 61265 (US)
(72) Erfinder: Gunther, Daniel, F-57600 Morsbach (FR); Roth, Arsène, F-57720 Walschbronn (FR)
(74) Vertreter: Feldmann, Bernhard

(56) Entgegenhaltungen:
- EP-A- 0 070 537
- EP-A- 0 201 897
- FR-A- 2 575 362

## Beschreibung

Die Erfindung betrifft einen Zugmittelförderer, insbesondere für eine Rundballenpresse, mit wenigstens zwei Zugmitteln, die über Rollen verlaufen, wobei in wenigstens einem Abschnitt zwischen zwei Rollen wenigstens eines der Zugmittel aus der gemeinsamen Bewegungsebene ausgelenkt wird und zu den verbleibenden Zugmitteln einen Spalt bildet.

Zugmittelförderer werden zum Transport von Schütt-Stückgut oder losem Gut in vielfältiger Weise benutzt und weisen Zugmittel, z. B. Flachriemen, Bänder, Kettengewirke oder dergleichen, auf, die das Fördergut tragen oder an diesem angreifen. Neben dem Fördergut gelangt zuweilen auch sonstiges Gut in den Förderbereich und ruft Blockagen oder Verstopfungen hervor, die meist manuell beseitigt werden müssen.

Aus der EP-A1-0 070 537 ist ein Zugmittelförderer zur Anwendung in einer Rundballenpresse bekannt, der mehrere über Rollen ablaufende Zugmittel zur Bildung eines Rundballens aus Erntegut aufweist. Kleine Bruchstücke des Ernteguts können durch Spalte zwischen den Zugmitteln hindurchtreten und sich in Kammern zwischen zwei Trums eines Zugmittels einschließen und zu Verstopfungen führen. Dementsprechend sind bei diesem Stand der Technik von den Zugmitteln einige aus der gemeinsamen Zugmittelbewegungsfläche ausgelenkt, um einen Spalt zu den verbleibenden Zugmitteln zu bilden, durch den das eingeschlossene Erntegut austreten kann. Hierzu sind die ausgelenkten Zugmittel über eine eigene zusätzliche Rolle geführt, die gegenüber der Verbindungslinie zweier benachbarter Rollen versetzt ist.

Die der Erfindung zugrunde liegende Aufgabe wird darin gesehen, einen Zugmittelförderer vorzuschlagen, bei dem das aus einem Spalt zwischen versetzt verlaufenden Zugmitteln austretende Gut noch besser abgeführt werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird das aus dem Bereich der Zugmittel seitlich zu dem Spalt herausgeführte Gut nicht auf der ausgelenkten Rolle angelagert, sondern fällt aus dem Förderbereich der Zugmittel heraus.

Es ist zwar aus der US-A-4 224 867 bekannt, Zugmittel, nämlich Flachriemen einer Rundballenpresse, über Rollen verlaufen zu lassen, die ihre Breite nicht überschreiten; bei diesen Rollen handelt es sich aber um Stellrollen für die Arme von Sensoren zur Erfassung der Riemenspannung. Zudem fällt in dem Bereich dieser Stellrollen und der ausgelenkten Riemen kein zusätzliches Gut an, das zu Verstopfungen führen könnte und abgesondert werden müßte.

Die weiteren Rollen können sich von einer Seitenwand freitragend zu den bzw. dem ausgelenkten Zugmittel(n) erstrecken und an der Seitenkante des letzten betreffenden Zugmittels enden.

Die weitere Rolle kann aber auch in einem Halter gelagert sein, der zumindest in dem Bereich des Zugmittels dessen Breite nicht wesentlich überschreitet und den Abtransport des Guts von der Rolle nicht behindert.

Zur Führung der Zugmittel auf den weiteren Rollen können diese eine entsprechende Außenform aufweisen. Außerdem kann die Umfangsfläche so ausgebildet werden, daß die Förderung des eingeschlossenen Guts zu den Spalten verstärkt wird.

Je nach der seitlichen Erstreckung der Zugmittelbewegungsfläche können auch mehrere sowohl freitragende als auch in einem Halter gelagerte weitere Rollen vorgesehen werden.

In der Zeichnung sind zwei nachfolgend näher beschriebene Ausführungsbeispiele der Erfindung dargestellt.

Es zeigt:
- Fig. 1: eine Teilansicht einer Rundballenpresse mit einem Zugmittelförderer in perspektivischer Darstellung,
- Fig. 2: den Zugmittelförderer im waagrechten Schnitt mit zwei freitragenden weiteren Rollen und
- Fig. 3: den Zugmittelförderer im waagrechten Schnitt mit zwei freitragenden und einer in einem Halter getragenen weiteren Rolle.

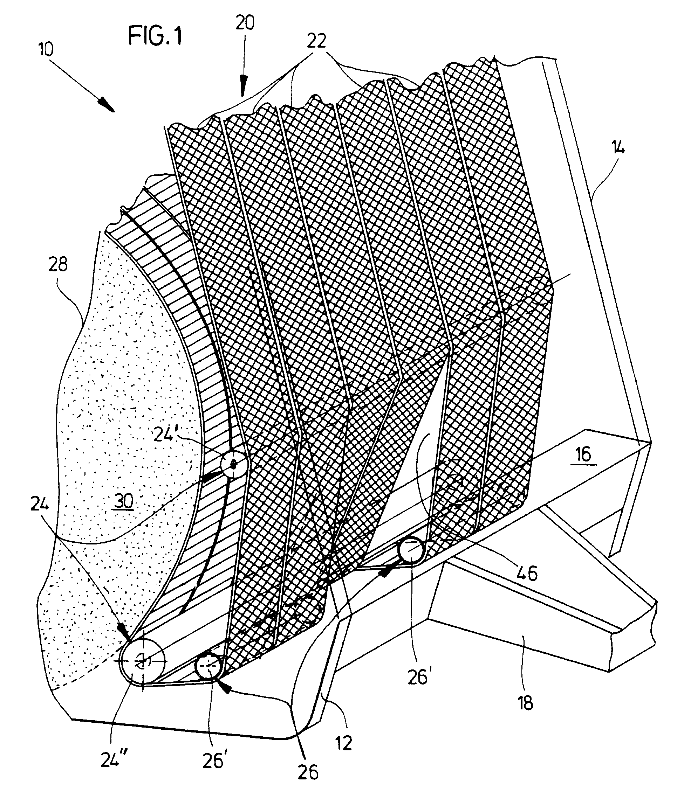

Von einer Rundballenpresse 10 ist in Figur 1 der vordere obere Bereich dargestellt, wobei eine rechte und eine linke Seitenwand 12 und 14 zu sehen sind, die jeweils an einer Traverse 16 angreifen. An die Traverse 16 ist eine Deichsel 18 angeschlossen, die sich zu einem Zugfahrzeug erstreckt. Die Rundballenpresse 10 ist auf nicht gezeigten Rädern beweglich getragen und kann mittels des Zugfahrzeugs über ein Feld bewegt werden, um dort liegendes Erntegut aufzunehmen und zu pressen.

Zum Pressen des Ernteguts ist ein Zugmittelförderer 20 vorgesehen, der in diesem Ausführungsbeispiel sechs Zugmittel 22 enthält, die sich über Rollen 24 erstrecken, von denen lediglich eine mittlere Rolle 24', eine untere Rolle 24'' und von weiteren Rollen 26 zwei freitragende Rollen 26' gezeigt sind.

Der Zugmittelförderer 20 dient dazu, von dem Boden über eine nicht gezeigte Pick-up aufgenommenes Erntegut spiralförmig zu einem Rundballen 28 innerhalb einer Preßkammer 30 aufzuwickeln. Hierzu werden die Zugmittel 22 über eine Vielzahl von Rollen 24 geführt, von denen wenigstens eine angetrieben ist und somit die Zugmittel 22 in Bewegung setzt. Die Rollen 24 sind so angeordnet, daß der Zugmittelförderer 20 einen Einlaßspalt für die Preßkammer 30 beläßt, durch den das Ernte- bzw. Preßgut eingespeist wird.

Die Zugmittel 22 sind in diesem Ausführungsbeispiel als Flachriemen mit einer profilierten Oberfläche ausgebildet, die nebeneinander auf den Rollen 24 angeordnet sind und außer im Bereich der Rollen 24, 24', 26 in einer gemeinsamen Zugmittelebene verlaufen. Nach diesem Ausführungsbeispiel sind 6 Zugmittel vorgesehen; je nach dem Abstand zwischen beiden Seitenwänden 12, 14 können aber auch mehr oder weniger Zugmittel 22 auf die Rollen 24, 26 aufgelegt werden.

Die Rollen 24 sind in den Seitenwänden 12, 14 drehbar gelagert und erstrecken sich über die gesamte Breite des Zugmittelförderers 20 und somit der Preßkammer 30. Die Anordnung der Rollen 24 ist so gewählt, daß eine Preßkammer 30 bestimmter Größe entstehen kann.

Die Ausbildung einer Rundballenpresse 10 mit einer größenveränderlichen Preßkammer 30, des umlaufenden Zugmittelförderers 20 und die Anordnung der Rollen 24 ist im übrigen bekannt und so wie in der EP-A1-0 070 537 beschrieben gestaltet. Auf eine weitergehende Beschreibung kann daher verzichtet werden.

Es wird jedoch darauf hingewiesen, daß die Erfindung außer an einem sonstigen Förderer im Bereich der Förder- und Verpackungsindustrie auch an einer Rundballenpresse mit einer Preßkammer 30 verwendet werden kann, deren Größe entweder nicht variabel oder nur teilweise variabel ist.

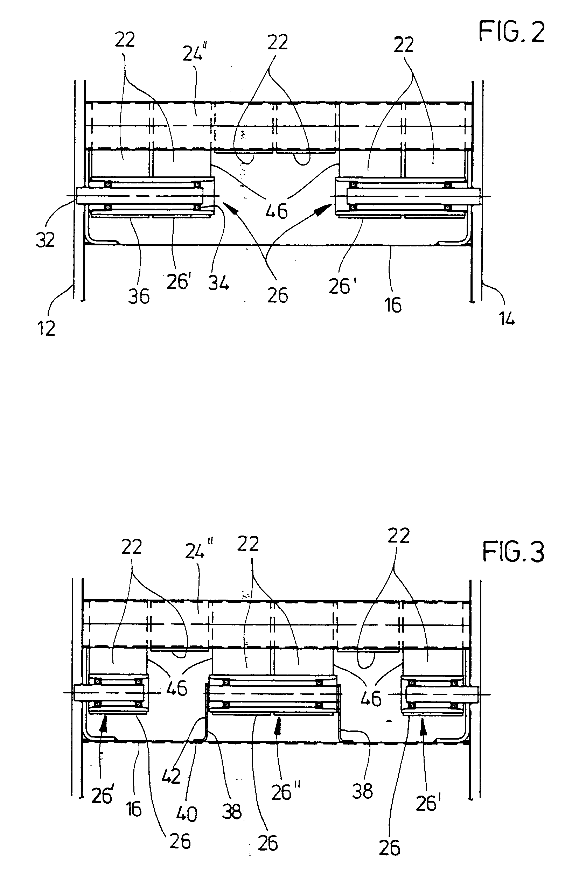

Der erfindungsgemäße Zugmittelförderer 20 weist als wesentlichen Bestandteil mindestens eine weitere Rolle 26 auf, wobei in dem vorliegenden Ausführungsbeispiel gemäß den Figuren 1 und 2 zwei weitere Rollen 26' und gemäß Figur 3 drei weitere Rollen 26' und 26'' vorgesehen sind.

Diese weiteren Rollen 26 erstrecken sich stets nur über die Breite eines einzigen oder zweier Zugmittel 22 - jedoch nicht über die gesamte Strecke zwischen beiden Seitenwänden 12, 14. Bei anderen Ausführungsbeispielen kann sich eine weitere Rolle 26 auch über die Breite von drei oder vier Zugmitteln 22 erstrecken.

Nach diesem Ausführungsbeispiel besteht jede weitere Rolle 26 aus einer Achse 32, Lagern 34 und einem Drehkörper 36. Die Achse 32 ist stets ortsfest gelagert und trägt über die Lager 34 beweglich den Drehkörper 36, über den das oder die Zugmittel 22 ablaufen.

Die Achsen 32 freitragend angeordneter weiterer Rollen 26' sind auf nicht gezeigte Weise in den seitenwänden 12 bzw. 14 starr befestigt.

Es wäre aber auch möglich, den Drehkörper 36 mit der Achse 32 einstückig zu bilden und das Lager 34 zwischen der Seitenwand 12, 14 und der Achse 32 vorzusehen.

Die Achse 32 einer gemäß Figur 3 im Mittenbereich des Zugmittelförderers 20 vorgesehenen weiteren Rolle 26'' ist in zwei Haltern 38 festgelegt, die L-förmig ausgebildet sind. Nach diesem Ausführungsbeispiel ist ein kurzer Schenkel 40 auf die Traverse 16 aufgeschweißt oder aufgeschraubt, während sich ein langer Schenkel 42 zu jeweils einer Stirnseite der Achse 32 erstreckt. Somit wird die weitere Rolle 26'' in der in Figur 3 gezeigten Stellung gehalten und lenkt in diesem Fall zwei Zugmittel 22 aus der gemeinsamen Bewegungsebene aus.

Die Anordnung der sechs Zugmittel 22 gemäß Figur 1 und 2 ist wie folgt getroffen. Ausgehend von der rechten Seitenwand 12 werden das erste und das zweite Zugmittel 22 über eine gemeinsame freitragende weitere Rolle 26' geführt, deren Achse 32 starr in der rechten Seitenwand 12 befestigt ist und die sich insgesamt über die Breite der beiden Zugmittel 22 erstreckt. Auf die beiden ersten und ausgelenkten Zugmittel 22 folgen das dritte und das vierte Zugmittel 22, die sich direkt, d. h. ohne seitliche Auslenkung, von der Rolle 24' zu der Rolle 24'' erstrecken und somit mit ihrem betreffenden Abschnitt gegenüber den ersten Zugmitteln 22 versetzt sind. Aufgrund dieses Versatzes ergibt sich ein Spalt 46, durch den Gut austreten kann. Auf das vierte Zugmittel 22 folgen das fünfte und das sechste Zugmittel 22, die wie das erste und das zweite Zugmittel 22 über eine freitragende weitere Rolle 26' geführt und somit gegenüber den verbleibenden Zugmitteln 22 versetzt sind. Dadurch ergibt sich auch zwischen dem vierten und dem fünften Zugmittel 22 ein Spalt 46, durch den Gut austreten kann.

Bei dem Ausführungsbeispiel nach Figur 3 sind von sechs Zugmitteln 22 das erste über eine freitragende Rolle 26', das dritte und das vierte über eine in einem Halter 38 gelagerte weitere Rolle 26'' und das sechste über eine freitragende Rolle 26' geführt und somit gegenüber dem zweiten bzw. dem fünften Zugmittel 22 ausgelenkt, die sich direkt von der Rolle 24' zu der Rolle 24'' erstrecken. Es ergeben sich wiederum zwei Spalte 46, durch die Gut austreten kann.

Die Drehkörper 36 der weiteren Rollen 26 können glatt zylindrisch oder im Bereich der Zugmittellauffläche ballig ausgebildet sein. Außerdem kann auf ihre Oberfläche eine Spirale aufgebracht sein, die ebenfalls der seitlichen Abfuhr von eingesperrtem Gut dient.

Darüber hinaus können die Rollen 26 auch asymmetrisch angeordnet werden im Gegensatz zu der symmetrischen Anordnung nach den Ausführungsbeispielen.

## Patentansprüche

1. Zugmittelförderer (20), insbesondere für eine Rundballenpresse (10), mit wenigstens zwei Zugmitteln (22), die über Rollen (24) verlaufen, wobei in wenigstens einem Abschnitt zwischen zwei Rollen (24', 24'') wenigstens eines der Zugmittel (22) aus der gemeinsamen Bewegungsebene ausgelenkt und über eine weitere ortsfest angeordnete Rolle (26, 26', 26'') geführt wird und zu den verbleibenden Zugmitteln (22) einen Spalt (46) bildet, dadurch gekennzeichnet, daß sich die wenigstens eine weitere Rolle (26, 26', 26'') lediglich im wesentlichen über die Breite des ausgelenkten Zugmittels (22) erstreckt.

2. Zugmittelförderer nach Anspruch 1, dadurch gekennzeichnet, daß die weitere Rolle (26') freitragend an einer Seitenwand (12, 14) gelagert ist.

3. Zugmittelförderer nach Anspruch 1, dadurch gekennzeichnet, daß die weitere Rolle (26'') an beiden Enden in einem Halter (38) drehbar gelagert ist, der sich in Richtung der Stirnflächen der weiteren Rolle (26'') erstreckt.

4. Zugmittelförderer nach einem oder mehreren der vorherigen Ansprüche, dadurch gekennzeichnet, daß mehrere weitere Rollen (26', 26'') vorgesehen sind, die nach Anspruch 2 oder 3 angeordnet sind.

5. Zugmittelförderer nach einem oder mehreren der vorherigen Ansprüche, dadurch gekennzeichnet, daß die weitere Rolle (26, 26', 26'') aus einer Achse (32) und einem Drehkörper (36) besteht, der auf der Achse (32) mittels Lagern (34) beweglich ist.

6. Zugmittelförderer nach Anspruch 5, dadurch gekennzeichnet, daß der Drehkörper (36) auf seiner Umfangsfläche glatt zylindrisch ausgebildet ist.

7. Zugmittelförderer nach Anspruch 5, dadurch gekennzeichnet, daß der Drehkörper (36) auf seiner Umfangsfläche im Bereich der Zugmittellauffläche ballig ausgebildet ist.

8. Zugmittelförderer nach Anspruch 5, dadurch gekennzeichnet, daß der Drehkörper (36) auf seiner Umfangsfläche mit einer Spirale versehen ist.

9. Zugmittelförderer nach einem oder mehreren der vorherigen Ansprüche, dadurch gekennzeichnet, daß die weiteren Rollen (26, 26', 26'') symmetrisch oder asymmetrisch angeordnet sind.

## Claims

1. Belt conveyor (20), more especially for a round bale press (10), with at least two conveying means (22) running over rollers (24), at least one of the conveying means (22) being deflected from the common plane of movement in at least one portion between two rollers (24', 24''), and guided over a further stationarily-disposed roller (26, 26', 26''), forming with the remaining conveyor means (22) a slot (46), characterised in that the at least one further roller (26, 26', 26'') extends substantially only over the width of the deflected conveyor means (22).

2. Belt conveyor according to claim 1, characterised in that the further roller (26') is mounted in a freely-supported manner on a side wall (12, 14).

3. Belt conveyor according to claim 1, characterised in that the further roller (26'') is mounted at both ends to rotate in a retaining means (38) which extends in the direction of the end faces of the further roller (26'').

4. Belt conveyor according to one or more of the preceding claims, characterised in that a plurality of further rollers (26', 26'') are provided, which are disposed in accordance with Claim 2 or 3.

5. Belt conveyor according to one or more of the preceding claims, characterised in that the further roller (26, 26', 26'') consists of an axle (32) and a rotary member (36), which is movable on the axle (32) by means of bearings (34).

6. Belt conveyor according to claim 5, characterised in that the rotary member (36) has a smooth cylindrical peripheral surface.

7. Belt conveyor according to claim 5, characterised in that the rotary member (36) is spherical on its peripheral surface in the region of the running surface of the conveying means.

8. Belt conveyor according to claim 5, characterised in that the rotary member (36) is provided with a spiral on its peripheral surface.

9. Belt conveyor according to one or more of the preceding claims, characterised in that the further rollers (26, 26', 26'') are disposed symmetrically or asymmetrically.

## Revendications

1. Transporteur (20) à moyen de traction, notamment pour une presse (10) à balles rondes, avec au moins deux moyens de traction 22) qui passent sur des poulies (24), au moins un des moyens de traction (22) étant, dans un tronçon compris entre deux poulies (24', 24''), dévié hors du plan commun de déplacement et guidé sur une poulie supplémentaire (26, 26', 26'') disposée stationnairement, et il forme une fente (46) avec les autres moyens de traction (22), **caractérisé** en ce que la ou les poulies supplémentaires (26, 26', 26'') s'étendent uniquement sensiblement sur la largeur du moyen de traction dévié (22).

2. Transporteur à moyen de traction selon la revendication 1, **caractérisé** en ce que la poulie supplémentaire (26') est montée en portée libre sur une paroi latérale (12, 14).

3. Transporteur à moyen de traction selon la revendication 1, **caractérisé** en ce que la poulie supplémentaire (26'') est montée à rotation aux deux extrémités dans un support (38) qui s'étend en direction des faces frontales de la poulie supplémentaire (26'').

4. Transporteur à moyen de traction selon l'une quelconque des revendications précédentes, **caractérisé** en ce qu'il est prévu plusieurs poulies supplémentaires (26', 26''), qui sont disposées selon la revendication 2 ou 3.

5. Transporteur à moyen de traction selon l'une quelconque des revendications précédentes, **caractérisé** en ce que la poulie supplémentaire (26, 26', 26'') est constituée d'un axe (32) et d'un corps rotatif (36), qui est mobile sur l'axe (32) au moyen de paliers (34).

6. Transporteur à moyen de traction selon la revendication 5, **caractérisé** en ce que le corps rotatif (36) est réalisé cylindrique et lisse sur sa face circonférentielle.

7. Transporteur à moyen de traction selon la revendication 5, **caractérisé** en ce que le corps rotatif (36) est réalisé bombé sur sa face circonférentielle dans la région de portée du moyen de traction.

8. Transporteur à moyen de traction selon la revendication 5, **caractérisé** en ce que le corps rotatif (36) est pourvu d'une spirale sur sa face circonférentielle.

9. Transporteur à moyen de traction selon l'une quelconque des revendications précédentes, **caractérisé** en ce que les poulies supplémentaires (26, 26', 26'') sont disposées de façon symétrique ou asymétrique.
